# EUROPEAN PATENT APPLICATION

(11) **EP 3 873 077 A1**
(43) Date of publication of application: **01.09.2021**
(21) Application number: 21156717.7
(22) Date of filing: 11.02.2021
(51) Int. Cl.: H04N 1/00, H04N 19/17, H04N 1/41

(54) **COMPRESSING IMAGE REGIONS CONTAINING DETAILED OBJECTS AND SIMPLIFIED BACKGROUNDS UNDER A FIXED NUMBER OF BYTES**

(30) Priority: 28.02.2020 US 202016805326
(71) Applicant: Palo Alto Research Center Incorporated, Webster, NY 14580 (US)
(72) Inventor: SHREVE, Matthew, Webster, NY New York 14580 (US)
(74) Representative: Gill Jennings & Every LLP

(57) **Abstract**

A method of processing image data includes: capturing an image with a camera; selecting one or more regions of interest within the captured image; analyzing the selected regions of interest to detect objects appearing therein, such that each detected object has a bounding therearound defining an image crop; for each image crop, iteratively compressing image data corresponding thereto, while varying one or more parameters with each successive iteration, until the compressed image data meets a target size; and transmitting the compressed image data meeting the target size over a wireless telecommunications link having a data rate limit imposed for such transmitting.

## Description

### BACKGROUND

The present specification relates to image processing. More specifically, it relates to digital image processing used to compress acquired image data into a relatively small number of bytes (and/or bits) for transmission over a wireless telecommunications link having a significantly constrained amount of time, bandwidth and/or resources to devote to such transmission. It finds suitable application in connection with oceanic sensors and will be described with particular reference thereto. However, it is to be appreciated that the subject matter described herein is equally suited to and/or adapted for other like applications.

It has been proposed to deploy inexpensive devices floating on the ocean to detect and report a variety of signals, including images, environmental information and signals generated by human activity and radio communications. For example, one proposed initiative aims to deploy a large fleet of inexpensive floating sensors (referred to herein as floats) that include cameras.

As proposed, the collected data including the image data collected by the float's camera is communicated from the float to a desired remote location (i.e., remote relative to the float) via a radio communication and/or wireless telecommunication link, e.g., a wireless link and/or radio communication to a satellite in orbit about the earth. The transmission of this data is generally permitted to employ and/or occupy a limited amount of time, bandwidth and/or other resources of the satellite and/or wireless link over which the transmission is being placed.

In some cases, these devices or floats may be restricted to selectively transmit acquired data with extremely limited data rates (e.g., 320 Bytes / 20 minutes); in such cases, it is generally important to transmit only essential information that is relevant to a particular goal or objective. Under such restrictive constraints, it may be infeasible and/or undesirable to rely on traditional image compression techniques (e.g., JPEG compression, GIF, etc.) to transmit whole images to remote servers.

According, there is described herein an inventive method, device and/or system to address the above-identified concerns.

### BRIEF DESCRIPTION

This Brief Description is provided to introduce concepts related to the present specification. It is not intended to identify essential features of the claimed subject matter nor is it intended for use in determining or limiting the scope of the claimed subject matter. The exemplary embodiments described below are not intended to be exhaustive or to limit the claims to the precise forms disclosed in the following Detailed Description. Rather, the embodiments are chosen and described so that others skilled in the art may appreciate and understand the principles and practices of the subject matter presented herein.

One embodiment disclosed herein provides for a method of processing image data. The method includes: capturing an image with a camera; selecting one or more regions of interest within the captured image; analyzing the selected regions of interest to detect objects appearing therein, such that each detected object has a bounding therearound defining an image crop; for each image crop, iteratively compressing image data corresponding thereto, while varying one or more parameters with each successive iteration, until the compressed image data meets a target size; and transmitting the compressed image data meeting the target size over a wireless telecommunications link having a data rate limit imposed for such transmitting.

Another embodiment disclosed herein relates to a sensor carrying device. The device includes: a camera, a processor and a transmitter. The camera captures an image within its field of view. The processor operates to process image data corresponding to the image captured by said camera. The processing includes: selecting one or more regions of interest within the captured image; analyzing the selected regions of interest to detect objects appearing therein, such that each detected object has a bounding therearound defining an image crop; and for each image crop, iteratively compressing image data corresponding thereto, while varying one or more parameters with each successive iteration, until the compressed image data meets a target size. The transmitter transmits compressed image data which meets the target size over a wireless telecommunications link having a data rate limit imposed for such transmitting.

Another embodiment disclosed herein relates to a float sufficiently buoyant to float on a body of water. The float includes a camera, a processor and a transmitter. The camera captures an image within its field of view and the processor operates to process image data corresponding to the image captured by the camera. The processing including: selecting one or more regions of interest within the captured image; analyzing the selected regions of interest to detect objects appearing therein, such that each detected object has a bounding therearound defining an image crop; and for each image crop, iteratively compressing image data corresponding thereto, while varying a set of parameters with each successive iteration, until the compressed image data meets a target size. The transmitter transmits compressed image data which meets the target size over a wireless telecommunications link having a data rate limit imposed for such transmitting. The set of parameters includes parameters k, q and r, where k represents a number of pixel intensity clusters, q represents a quality of the compression and r represents an output resolution. A given iteration of compressing includes: resizing the image crop to a resolution indicated by a value of the parameter r for that given iteration; performing intensity-base clustering on resulting image intensities of the resized image crop to produce a number of intensity clusters, where the number of clusters is indicated by a value of the parameter k for the given iteration; setting each pixel within the resized image crop to a mean intensity value of one or more clusters which are closest to said pixel; and with each pixel so set, applying a compression algorithm to the image data corresponding to the resized image crop using an input quality according to a value of the parameter q for the given iteration.

Numerous advantages and benefits of the subject matter disclosed herein will become apparent to those of ordinary skill in the art upon reading and understanding the present specification. It is to be understood, however, that the detailed description of the various embodiments and specific examples, while indicating preferred and/or other embodiments, are given by way of illustration and not limitation.

### BRIEF DESCRIPTION OF THE DRAWINGS

The following Detailed Description makes reference to the figures in the accompanying drawings. However, the inventive subject matter disclosed herein may take form in various components and arrangements of components, and in various steps and arrangements of steps. The drawings are only for purposes of illustrating exemplary and/or preferred embodiments and are not to be construed as limiting. Further, it is to be appreciated that the drawings may not be to scale.
FIGURE 1 is a diagrammatic illustration showing an exemplary system including a sensor carrying device and/or float suitable for practicing aspects of the subject matter disclosed herein.
FIGURE 2 is a flow chart showing an exemplary method for processing image data in accordance with aspects of the subject matter disclosed herein, e.g., carried out by the sensor carrying device illustrated in FIGURE 1.

### DETAILED DESCRIPTION

For clarity and simplicity, the present specification shall refer to structural and/or functional elements, relevant standards, algorithms and/or protocols, and other components, methods and/or processes that are commonly known in the art without further detailed explanation as to their configuration or operation except to the extent they have been modified or altered in accordance with and/or to accommodate the preferred and/or other embodiment(s) presented herein. Moreover, the apparatuses and methods disclosed in the present specification are described in detail by way of examples and with reference to the figures. Unless otherwise specified, like numbers in the figures indicate references to the same, similar or corresponding elements throughout the figures. It will be appreciated that modifications to disclosed and described examples, arrangements, configurations, components, elements, apparatuses, methods, materials, etc. can be made and may be desired for a specific application. In this disclosure, any identification of specific materials, techniques, arrangements, etc. are either related to a specific example presented or are merely a general description of such a material, technique, arrangement, etc. Identifications of specific details or examples are not intended to be, and should not be, construed as mandatory or limiting unless specifically designated as such. Selected examples of apparatuses and methods are hereinafter disclosed and described in detail with reference made to the figures.

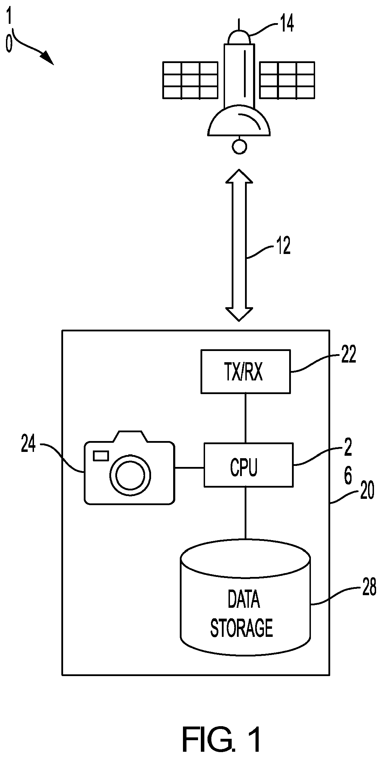

With reference to FIGURE 1, there is illustrated an exemplary embodiment of a system 10 including a sensor carrying device 20. In practice, the sensor carrying device 20 is equipped and/or otherwise provisioned with a transceiver 22. Via the transceiver 22, the sensor carrying device 20 wirelessly communicates (i.e., transmits and/or receives messages, signals and/or data) over a wireless telecommunications link 12. As shown, the link 12 operatively, wirelessly connects the sensor carrying device 20 to a satellite 14 in orbit about the Earth or other planet on which the sensor carrying device 20 is situated. In practice, the satellite 14 operates to relay messages, data and/or signals between the sensor carrying device 20 and an end user device, e.g., such as a computer, server or the like located remotely away from the sensor carrying device 20, which end user device receives data originating from the sensor carrying device 20 and/or administers operation thereof.

As shown, the sensor carrying device 20 is equipped and/or otherwise provisioned with a camera 24, e.g., a digital camera, that selectively captures images of the environment in which the sensor carrying device 20 is placed. Suitably, the sensor carrying device 20 is made to be sufficiently buoyant to float on the surface of a body of water, e.g., such as an ocean, sea, lake, etc. In practice, the sensor carrying device 20 may be implemented as or on a buoy or the like and will be, on occasion, referred to herein as a float.

In a suitable embodiment, the sensor carrying device 20 is equipped and/or otherwise provisioned with a central processing unit (CPU) and/or data processor 26 and a data storage device 28. In practice, the data processor 26 controls operation of the sensor carrying device 20 and/or regulates operation of the various components thereof. Measurements and/or data collected, generated and/or produced by the sensors carried on the device 20, including image data generated, produced and/or output by the camera 24 as a result of an image being captured thereby, is suitably stored by and/or maintained in the data storage device 28.

Additionally, the data processor 26 suitably performs image and/or other data processing on the image data as described herein. The results of such image and/or other data processing performed on the image data (which results are referred to herein, on occasion, as the processed image data) may likewise be stored by and/or maintained in the data storage device 28. Suitably, the data storage device 28 may also store and/or maintain instructions, software, program code and/or the like which is executed by the data processor 26 to carry out the function(s) thereof and/or operation(s) performed thereby.

In practice, the processed image data is wirelessly transmitted via the transceiver 22 from the sensor carrying device 20 over the link 12, e.g., to the satellite 14 which in turn relays the processed image data to the end user device. Suitably, the processed image data is relayed to the end user device from the satellite 14 over a suitable telecommunications network with which the satellite 14 is in operative communication.

In practice, due to the limited resources of the satellite 14, traffic constraints on the link 12 and/or otherwise, a significantly limited bandwidth and/or data rate is established and/or imposed for the transmission of data, including image data, from the sensor carrying device 20 over the link 12. For example, the aforementioned bandwidth and/or data rate may be limited to around no more than 320 bytes per 20 minutes. Accordingly, the image and/or other data processing performed by the sensor carrying device 20 (e.g., via the data processor 26) generates and/or produces processed image data which is suitably compressed to fit within a designated size, e.g., within a set limit and/or determined number of bytes or bits. In this way, the processed image data can be efficiently transmitted from the sensor carrying device 20 (e.g., via the transceiver 22) over the link 12 within the allotted bandwidth and/or at the imposed data rate while maintaining a suitable amount of desired information from the corresponding image captured by the camera 24.

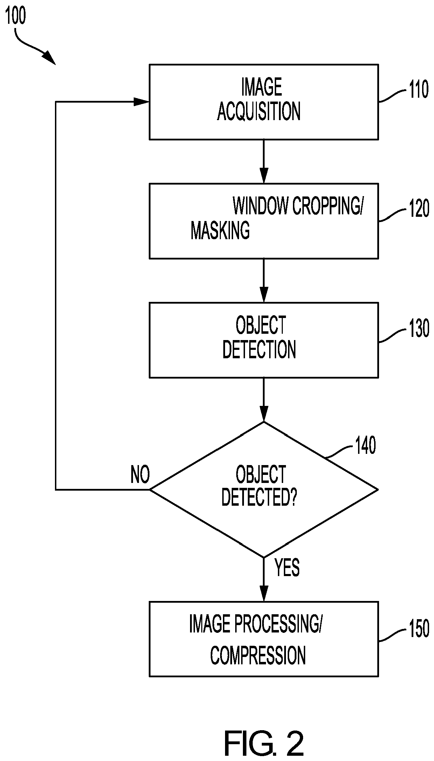

With added reference to FIGURE 2, there is described herein a method and/or process 100 for processing image data generated by the camera 24, which method and/or process 100 is carried out and/or otherwise executed by the sensor carrying device 20, e.g., via the data processor 26. In general, an object detection model is first run on the obtained image data such that regions of interest (ROIs) are extracted that contain probable objects of interests (e.g., watercraft, floating debris, wildlife, etc.); and second, a series of compression techniques are used that are designed to retain desired information (e.g., detailed, high frequency information) of each objects appearance, while sacrificing background information which is largely undesirable and/or uninteresting, e.g., such as sea water, waves, cloud detail, etc. In essence, the sensor carrying device 20 and/or the image processing carried out thereby operates to detect, crop, and compress images of objects so that they can be efficiently and/or effectively transmitted over telecommunications networks and/or wireless data transmission links with limited data rates. The method/process 100 and/or the sensor carrying device 20 is particularly suited for the transmission of images of objects located in scenes with simple backgrounds. Generally, it works by optimizing a series of compression steps so that the resulting processed image data can be stored or otherwise fit within a target size, i.e., within a target number of bytes or bits.

As shown in FIGURE 2, the method/process 100 beings with the acquisition of an image, e.g., by the camera 24. Suitably, the image acquisition step 110 includes the generation of image data representing the image captured by the camera 24. For example, the acquired image data corresponding to the captured image may take the form of suitable data and/or values representing and/or describing the respective pixels which make up the image.

Following the image acquisition step 110, a cropping and/or masking step 120 is executed on the acquired image data. The cropping/masking step 120 operates to identify candidate regions and/or areas within the captured image that tend to trigger false positives in an object detection step 130 that is to follow. In particular, the appearance of certain things within the captured image may not in fact be of interest despite their tendency to trigger the object detection step 130 to indicate the existence of an object at the location where the things appear in the image. Example regions can include, without limitation: parts of the image which are known or otherwise determined to contain the sensor carrying device 20 itself (or portions thereof) within the field of view (FoV) of the camera 24; improbable regions within images where repeat detections of objects appear over significant periods of time (e.g., which might indicate water or dirt or grime or the like on the camera's lens or otherwise obstructing the camera's FoV and constantly or continually showing up in multiple images causing false positives); etc.

In one example embodiment, one or more windows (e.g., rectangular regions or otherwise) are cropped out of the image that are pre-determined and/or otherwise identified to be valid object detection regions (e.g., not having parts of the sensor carrying device 20 visible, etc.), and the remainder of the image is removed, discarded and/or otherwise ignored in the steps and/or processing that follows. Alternatively, the pre-determined and/or otherwise identified regions which are known or otherwise determined to produce false positives or unwanted or uninteresting objection detections can be cropped out of the image and discarded, removed or ignored in following processing/steps, while the remainder of the image (containing valid objection detection regions) is preserved and subjected to the processing and/or steps which follows.

In another exemplary embodiment, a binary mask (e.g., of 1's and 0's) of the same dimensionality as the acquired and/or input image is used to filter and/or distinguish valid and/or wanted object detection regions (i.e., regions where object detection is desired) from those which are invalid or unwanted, e.g., those regions of the image where false positives tend to be triggered. For example, if an object detection is found to be positive in a location of the image where a '0' value is populated and/or set in the mask, then that detection is ignored and/or otherwise disregarded, e.g., in the steps and/or processing which follows.

As shown in FIGURE 2, the object detection step 130 follows step 120. In particular, each captured image, or more precisely, the valid portions thereof surviving/remaining after step 120 and/or identified and/or selected in step 120 for continued processing, is passed through an object detector that has been trained, programmed and/or otherwise provisioned to detect objects of interest (e.g., watercraft, vehicles, aircraft, wildlife, debris, etc.). In practice, the output of the object detection step 130 is a region of interest (ROI) that indicates the location and spatial extent (e.g., in image coordinates) of a detected object.

As illustrated in FIGURE 2, at decision step 140, in no objects are detected, the method/process 100 loops back to the image acquisition step 110 for another iteration. Alternatively, if an object has been detected, each of the aforementioned ROIs (i.e., those containing detected objects) are ultimately passed to step 150 for compression.

At step 150, a compression process is carried out on those regions of the image containing detected objects (i.e., the ROIs identified and/or selected by the object detection step 130). That is to say, if an object or objects have been detected, then for each detected object, a compression process is applied to that portion of the image containing the object. Suitably, in one exemplary embodiment, the compression is executed and/or carried out as follows:
- the image pixels defined by the bounding of the detected object (referred to as the image crop) are extracted;
- optionally, if high-frequency object detail is to be prioritized over color, the image crop is converted from color to grayscale; and
- a size-target (e.g., expressed in bytes) optimization is run using the parameters k, q and r; where k represents the number of pixel intensity clusters, q represents the quality of the compression (i.e., a compression algorithm dependent parameter, e.g., usually a float value between [0, 1]) and r represents an output resolution (i.e., the final transmitted image resolution).

In other words, in step 150, the ROI within the image containing the detected object is extracted. Optionally, e.g., if image detail is prioritized over color, the extracted image data is converted from color to grayscale. For example, desirable image detail may include high frequency information such as, without limitation, rails on ships, writing on objects, wheel detail, etc. By converting the image to grayscale first, the potential number of pixel intensity clusters found during optimization may be reduced, thereby increasing the likelihood that the intensities used in the high frequency regions are retained.

In practice, the optimization routine is iteratively run, while selectively varying and/or otherwise adjusting the parameters k, q and r for each iteration, until the compressed image data falls and/or fits within a designated target size, e.g., until the compressed image data is less than or equal to a set or otherwise determined number of bytes.

In one exemplary embodiment, a number of nested processing loops are employed to iteratively run the optimization routine while selectively varying and/or otherwise adjusting the parameters. Suitably, the parameter r is varied in the outermost loop (e.g., from a highest preset or otherwise determined resolution to a lowest preset or otherwise determined resolution); the parameter k is varied in the intermediate loop (e.g., from a highest preset or otherwise determined number of intensity clusters to a lowest preset or otherwise determined number of intensity clusters); and the parameter q is varied in the innermost loop (e.g., from a highest preset or otherwise determined quality value to a lowest preset or otherwise determined quality value). Accordingly, for any given iteration, a parameter set including particular values for r, k and q is defined depending on how many times each of the respective loops have been run through to arrive at the given iteration.

The routine run on a subject image crop during each iteration, in one suitable embodiment, includes copying the subject image crop and resizing the copy to the resolution indicated by the value of the parameter r for that given iteration. Next, intensity-base clustering (e.g., K-means clustering) is performed on the resulting image intensities of the resized image crop where the number of clusters is given by the value of the parameter k for the given iteration. In turn, each pixel in the resized image crop is set to the mean intensity of its closest cluster(s) (e.g., as determined using Euclidian distance). With the intensities of the pixels in the resized image crop so set, an image compression algorithm (e.g., such as JPEG, WEBP, etc.) is run on and/or applied to the image data using an input quality according to the value of q for the given iteration. The resulting compressed image data may then be saved or otherwise stored and the size thereof (e.g., in bytes) is compared to a designated or otherwise determined target size or threshold. If the target size is met (e.g., the size of resulting compressed image data is at or below the threshold), then the desired optimization has been achieved an no further iterations are performed. Accordingly, the compressed image data may now be transmitted over the link 12, e.g., using the transceiver 22. Otherwise, the next iteration is performed with the next set of parameters r, k and q. In practice, subsequent iterations may proceed so on until the target size is suitably met. Suitably, if all possible parameters sets are exhausted and the target size remains unmet, then a determination is made that the target size is unattainable and optionally a suitable indication of the same is provided.

In one suitable embodiment, an algorithm (expressed in pseudo-code) for achieving the aforementioned optimized compression is as follows:
// r is the preset resolution
// k is the number of preset intensity clusters
// q is the compression quality of a known compression algorithm

Initialize and set target_bytes // example 300, the target number of bytes used to store the compressed image.
Initialize and set imc2 to empty
For each image crop:
For r from highest preset resolution to lowest preset resolution:
For k from the highest number of preset cluster to the lowest number of preset clusters:
For q from the highest quality to the lowest quality:
Create a copy (imc) of the input cropped image and resize it to r Perform intensity-based clustering (e.g., K-means) on the image intensities.
Set each image pixel in imc to the mean intensity of the closest clusters (e.g., using Euclidean distance).
Perform traditional image compression on imc (e.g., JPEG, WEBP) using input quality q and store the bytes in im2.
If the number bytes used to store imc2 < target_bytes
   return imc2 // compression target is met. imc2 is stored / transmitted
If imc2 is empty
return compression target cannot be met.

The above methods, system, platforms, modules, processes, algorithms and/or apparatus have been described with respect to particular embodiments. It is to be appreciated, however, that certain modifications and/or alteration are also contemplated.

It is to be appreciated that in connection with the particular exemplary embodiment(s) presented herein certain structural and/or function features are described as being incorporated in defined elements and/or components. However, it is contemplated that these features may, to the same or similar benefit, also likewise be incorporated in other elements and/or components where appropriate. It is also to be appreciated that different aspects of the exemplary embodiments may be selectively employed as appropriate to achieve other alternate embodiments suited for desired applications, the other alternate embodiments thereby realizing the respective advantages of the aspects incorporated therein.

It is also to be appreciated that any one or more of the particular tasks, steps, processes, methods, functions, elements and/or components described herein may suitably be implemented via hardware, software, firmware or a combination thereof. In particular, various modules, components and/or elements may be embodied by processors, electrical circuits, computers and/or other electronic data processing devices that are configured and/or otherwise provisioned to perform one or more of the tasks, steps, processes, methods and/or functions described herein. For example, a processor, computer or other electronic data processing device embodying a particular element may be provided, supplied and/or programmed with a suitable listing of code (e.g., such as source code, interpretive code, object code, directly executable code, and so forth) or other like instructions or software or firmware, such that when run and/or executed by the computer or other electronic data processing device one or more of the tasks, steps, processes, methods and/or functions described herein are completed or otherwise performed. Suitably, the listing of code or other like instructions or software or firmware is implemented as and/or recorded, stored, contained or included in and/or on a non-transitory computer and/or machine readable storage medium or media so as to be providable to and/or executable by the computer or other electronic data processing device. For example, suitable storage mediums and/or media can include but are not limited to: floppy disks, flexible disks, hard disks, magnetic tape, or any other magnetic storage medium or media, CD-ROM, DVD, optical disks, or any other optical medium or media, a RAM, a ROM, a PROM, an EPROM, a FLASH-EPROM, or other memory or chip or cartridge, or any other tangible medium or media from which a computer or machine or electronic data processing device can read and use. In essence, as used herein, non-transitory computer-readable and/or machine-readable mediums and/or media comprise all computer-readable and/or machine-readable mediums and/or media except for a transitory, propagating signal.

Optionally, any one or more of the particular tasks, steps, processes, methods, functions, elements and/or components described herein may be implemented on and/or embodiment in one or more general purpose computers, special purpose computer(s), a programmed microprocessor or microcontroller and peripheral integrated circuit elements, an ASIC or other integrated circuit, a digital signal processor, a hardwired electronic or logic circuit such as a discrete element circuit, a programmable logic device such as a PLD, PLA, FPGA, Graphical card CPU (GPU), or PAL, or the like. In general, any device, capable of implementing a finite state machine that is in turn capable of implementing the respective tasks, steps, processes, methods and/or functions described herein can be used.

Additionally, it is to be appreciated that certain elements described herein as incorporated together may under suitable circumstances be stand-alone elements or otherwise divided. Similarly, a plurality of particular functions described as being carried out by one particular element may be carried out by a plurality of distinct elements acting independently to carry out individual functions, or certain individual functions may be split-up and carried out by a plurality of distinct elements acting in concert. Alternately, some elements or components otherwise described and/or shown herein as distinct from one another may be physically or functionally combined where appropriate.

In short, the present specification has been set forth with reference to preferred embodiments. Obviously, modifications and alterations will occur to others upon reading and understanding the present specification. It is intended that all such modifications and alterations are included herein insofar as they come within the scope of the appended claims or the equivalents thereof. It will be appreciated that variants of the above-disclosed and other features and functions, or alternatives thereof, may be combined into many other different systems or applications. Various presently unforeseen or unanticipated alternatives, modifications, variations or improvements therein may be subsequently made by those skilled in the art which are also intended to be encompassed by the following claims.

## Claims

1. A method of processing image data, said method comprising:
capturing an image with a camera;
selecting one or more regions of interest within the captured image;
analyzing the selected regions of interest to detect objects appearing therein, such that each detected object has a bounding therearound defining an image crop;
for each image crop, iteratively compressing image data corresponding thereto, while varying one or more parameters with each successive iteration, until the compressed image data meets a target size; and
transmitting the compressed image data meeting the target size over a wireless telecommunications link having a data rate limit imposed for such transmitting.

2. The method of claim 1, further comprising:
converting the captured image from a color image to a grayscale image.

3. The method of claim 1, wherein the one or more parameters include parameters k, q and r, where k represents a number of pixel intensity clusters, q represents a quality of the compression and r represents an output resolution.

4. The method of claim 3, wherein a given iteration of compressing includes resizing the image crop to a resolution indicated by a value of the parameter r for that given iteration.

5. The method of claim 4, wherein the given iteration of compressing includes:
performing intensity-base clustering on resulting image intensities of the resized image crop, where a number of clusters used for performing the clustering is given by a value of the parameter k for the given iteration; and
setting each pixel within the resized image crop to a mean intensity value of clusters, resulting from the performance of said clustering, which are closest to said pixel.

6. The method of claim 5, wherein the given iteration of compressing includes:
with each pixel so set, applying a compression algorithm to the image data corresponding to the resized image crop using an input quality according to a value of the parameter q for the given iteration.

7. The method of claim 6, further comprising:
comparing a size of the compressed image data to a threshold, such that when the size does not exceed said threshold, then the target size is deemed met and further subsequent iterations are not performed.

8. The method of claim 1, wherein the wireless telecommunications link is with a satellite and the data rate limit is about 320 bytes per 20 minutes or less.

9. The method of claim 1, wherein said camera is attached to a sensor carrying device.

10. The method of claim 9, further comprising:
floating said sensor carrying device on a body of water.

11. A sensor carrying device comprising:
a camera which captures an image within its field of view;
a processor that operates to process image data corresponding to the image captured by said camera, said processing including: selecting one or more regions of interest within the captured image; analyzing the selected regions of interest to detect objects appearing therein, such that each detected object has a bounding therearound defining an image crop; and for each image crop, iteratively compressing image data corresponding thereto, while varying one or more parameters with each successive iteration, until the compressed image data meets a target size; and
a transmitter that transmits compressed image data which meets the target size over a wireless telecommunications link having a data rate limit imposed for such transmitting.

12. The device of claim 10, wherein the wireless telecommunications link is with a satellite and the data rate limit is about 320 bytes per 20 minutes or less.

13. The device of claim 12, wherein said device is made sufficiently buoyant to float on a body of water.

14. The device of claim 10, wherein the processor further operates to:
convert the captured image from a color image to a grayscale image.

15. The device of claim 10, wherein the one or more parameters include parameters k, q and r, where k represents a number of pixel intensity clusters, q represents a quality of the compression and r represents an output resolution.

16. The device of claim 15, wherein a given iteration of compressing includes resizing the image crop to a resolution indicated by a value of the parameter r for that given iteration.

17. The device of claim 16, wherein the given iteration of compressing includes:
performing intensity-base clustering on resulting image intensities of the resized image crop, where a number of clusters used for performing the clustering is given by a value of the parameter k for the given iteration; and
setting each pixel within the resized image crop to a mean intensity value of clusters, resulting from the performance of said clustering, which are closest to said pixel.

18. The device of claim 17, wherein the given iteration of compressing includes:
with each pixel so set, applying a compression algorithm to the image data corresponding to the resized image crop using an input quality according to a value of the parameter q for the given iteration.

19. The device of claim 18, wherein the processor is further operative to:
compare a size of the compressed image data to a threshold, such that when the size does not exceed said threshold, then the target size is deemed met and further subsequent iterations are not performed.

20. A float sufficiently buoyant to float on a body of water, said float comprising:
a camera which captures an image within its field of view;
a processor that operates to process image data corresponding to the image captured by said camera, said processing including: selecting one or more regions of interest within the captured image; analyzing the selected regions of interest to detect objects appearing therein, such that each detected object has a bounding therearound defining an image crop; and for each image crop, iteratively compressing image data corresponding thereto, while varying a set of parameters with each successive iteration, until the compressed image data meets a target size; and
a transmitter that transmits compressed image data which meets the target size over a wireless telecommunications link having a data rate limit imposed for such transmitting;
wherein the set of parameters includes parameters k, q and r, where k represents a number of pixel intensity clusters, q represents a quality of the compression and r represents an output resolution; and
wherein a given iteration of compressing includes:
resizing the image crop to a resolution indicated by a value of the parameter r for that given iteration;
performing intensity-base clustering on resulting image intensities of the resized image crop to produce a number of intensity clusters, where the number of clusters is indicated by a value of the parameter k for the given iteration;
setting each pixel within the resized image crop to a mean intensity value of one or more clusters which are closest to said pixel; and
with each pixel so set, applying a compression algorithm to the image data corresponding to the resized image crop using an input quality according to a value of the parameter q for the given iteration.
